# EUROPÄISCHE PATENTANMELDUNG

(11) **EP 3 290 160 A1**
(43) Veröffentlichungstag der Anmeldung: **07.03.2018**
(21) Anmeldenummer: 17177571.1
(22) Anmeldetag: 23.06.2017
(51) Int. Cl.: B25F 5/02

(54) **ZUSATZMODUL ZUR VERWENDUNG MIT EINEM ARBEITSGERÄT UND ARBEITSGERÄT**

(30) Priorität: 11.08.2016 DE 102016214936
(71) Anmelder: Robert Bosch GmbH, 70442 Stuttgart (DE)
(72) Erfinder: Kiesslich, Marcus, 71570 Oppenweiler (DE)
(74) Vertreter: Thürer, Andreas

(57) **Zusammenfassung**

Die Erfindung betrifft ein Zusatzmodul (180) zur Verwendung mit einem Arbeitsgerät (100'), mit einer Funktionseinrichtung (183), die wenigstens eine Zusatzfunktion für das Arbeitsgerät (100') bereitstellt, wobei das Arbeitsgerät (100') eine mit einem Gehäuse (140) des Arbeitsgerätes mittels wenigstens einer Schnittstelle (151, 151', 152, 152') mechanisch und elektrisch verbindbare Energieversorgungseinheit (150) aufweist, wobei das Zusatzmodul (180) mechanisch und elektrisch unter Verwendung eines energieversorgungseinheitsseitigen Anteils (181, 182) der wenigstens einen Schnittstelle mit dem Gehäuse (140) des Arbeitsgerätes (100') verbindbar ist, wobei das Zusatzmodul (180) mechanisch und elektrisch unter Verwendung eines gehäuseseitigen Anteils (181', 182') der wenigstens einen Schnittstelle mit der Energieversorgungeinheit (150) verbindbar ist, und wobei das Zusatzmodul (180) dazu ausgebildet ist, eine elektrische Verbindung (185, 285) zwischen dem gehäuseseitigen und dem energieversorgungseinheitsseitigen Anteil der wenigstens einen Schnittstelle, die einer elektrischen Verbindung dienen, bereitzustellen.

## Beschreibung

Die vorliegende Erfindung betrifft ein Zusatzmodul zur Verwendung mit einem Arbeitsgerät, mit einer Funktionseinrichtung, die eine Zusatzfunktion für das mobile Arbeitsgerät bereitstellt, sowie ein solches Arbeitsgerät und eine Verwendung eines solchen Zusatzmoduls oder Arbeitsgeräts.

### Stand der Technik

Bei Montagearbeiten, insbesondere im industriellen Bereich, kommen Arbeitsgeräte, insbesondere mobile Arbeitsgeräte bzw. Handwerkzeuge wie Nietgeräte, Clinchgeräte, Stanzgeräte, Schraubgeräte, Bohrgeräte und Schweißgeräte, zum Einsatz, die einfach und flexibel handhabbar sind. Dazu können solche Arbeitsgeräte bspw. von einem Benutzer aufgenommen, benutzt und wieder zurückgelegt werden.

Weiterhin kommen in der industriellen Fertigung, bspw. im Automobilbau, auch stationäre Arbeitsgeräte bzw. Anlagen als Schraub-, Stanz-, Clinch-, Niet- oder Schweißgeräte zum Einsatz.

Für solche Arbeitsgeräte können dabei gewisse Zusatzfunktionen, wie bspw. eine Ortungsfunktion, vorgesehen sein, womit bspw. die Prozesssicherheit erhöht werden kann.

### Offenbarung der Erfindung

Erfindungsgemäß werden ein Zusatzmodul für ein Arbeitsgerät sowie ein solches Arbeitsgerät und eine Verwendung eines solchen Zusatzmoduls oder Arbeitsgeräts mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Zusatzmodul weist eine Funktionseinrichtung auf, die wenigstens eine Zusatzfunktion für ein Arbeitsgerät bereitstellt. Das Zusatzmodul ist dabei zur Verwendung mit einem Arbeitsgerät vorgesehen, das eine mit einem Gehäuse des Arbeitsgerätes mittels wenigstens einer Schnittstelle mechanisch und elektrisch verbindbare Energieversorgungseinheit aufweist. Das Zusatzmodul weist selbst einen energieversorgungseinheitsseitigen Schnittstellenanteil (zum Zusammenwirken mit dem gehäuseseitigen Schnittstellenanteil am Gehäuse) und einen gehäuseseitigen Schnittstellenanteil (zum Zusammenwirken mit dem energieversorgungseinheitsseitigen Schnittstellenanteil an der Energieversorgungseinheit) auf. Dabei ist das Zusatzmodul mechanisch und elektrisch unter Verwendung des energieversorgungseinheitsseitigen Anteils der wenigstens einen Schnittstelle mit dem Gehäuse des mobilen Arbeitsgerätes (durch Zusammenwirken mit dem gehäuseseitigen Anteil der Schnittstelle am Gehäuse) verbindbar ist und es ist mechanisch und elektrisch unter Verwendung des gehäuseseitigen Anteils der wenigstens einen Schnittstelle mit der Energieversorgungeinheit (durch Zusammenwirken mit dem energieversorgungseinheitsseitigen Anteil der Schnittstelle an der Energieversorgungseinheit) verbindbar. Zudem ist das Zusatzmodul dazu ausgebildet, eine elektrische Verbindung zwischen dem gehäuseseitigen und dem energieversorgungseinheitsseitigen Anteil der wenigstens einen Schnittstelle, die einer elektrischen Verbindung dienen, bereitzustellen.

Um Zusatzfunktionen wie bspw. eine Ortungsfunktion für ein Arbeitsgerät bereitzustellen können entsprechende Module an herkömmlichen Arbeitsgeräten außen am Gehäuse angebracht werden. Problematisch ist hierbei jedoch eine eventuell nötige Energieversorgung des Zusatzmoduls. Außerdem können solche außen am Gehäuse angebrachten Module oftmals bei der Verwendung des Arbeitsgerätes störend oder hinderlich sein. Eine andere Möglichkeit ist eine Integration der Zusatzfunktion bzw. des Moduls direkt in das Gehäuse des Arbeitsgerätes. Hierbei ist jedoch ein hoher Designaufwand erforderlich. Zudem müsste eine zusätzliche Produktnummer für die abgewandelte Variante des Arbeitsgerätes vergeben und in der Lagerhaltung berücksichtigt werden.

Das vorgeschlagene Zusatzmodul stellt nun eine solche Zusatzfunktion für ein Arbeitsgerät bereit und kann dabei sehr einfach zwischen das Gehäuse des Arbeitsgeräts und eine Energieversorgungseinheit des Arbeitsgeräts, insbesondere einen Akku, eingebracht werden. Das Zusatzmodul kann dabei bspw. derart geformt sein, dass es sich hinsichtlich äußerer Konturen an das Arbeitsgerät bzw. dessen Gehäuse und Energieversorgungseinheit angleicht. Insbesondere kann die Einbringung dabei auch nachträglich erfolgen und das Zusatzmodul kann auch wieder entfernt werden. Zudem kann das Zusatzmodul bspw. auch für verschiedene Arbeitsgeräte verwendet werden. Da weiterhin die Energieversorgung des Arbeitsgerätes durch die Energieversorgungseinheit sichergestellt wird, treten keine Einschränkungen bei der Verwendung bzw. beim Betrieb des Arbeitsgeräts auf.

Vorzugsweise ist die Funktionseinrichtung elektrisch betreibbar und das Zusatzmodul ist dazu ausgebildet, die Funktionseinrichtung mittels der Energieversorgungseinheit des Arbeitsgerätes mit elektrischer Energie zu versorgen, wenn das Zusatzmodul mit der Energieversorgungseinheit verbunden ist. Auf diese Weise kann die Energieversorgungseinheit des Arbeitsgerätes gleichzeitig auch zur Energieversorgung des Zusatzmoduls bzw. dessen Funktionseinrichtung verwendet werden. Eine zusätzliche Energieversorgung ist dabei nicht nötig. Dabei wird ausgenutzt, dass durch das Zusatzmodul ohnehin ein elektrischer Kontakt zur Energieversorgungseinheit bereitgestellt wird. Aufwändige Lösungen wie bspw. bei außen am Gehäuse angebrachten Modulen sind hierbei nicht nötig.

Vorteilhafterweise ist eine Datenschnittstelle vorgesehen, mittels welcher Daten zwischen der Funktionseinrichtung und dem Arbeitsgerät austauschbar sind. Auf diese Weise kann das Zusatzmodul bspw. als Datenspeicher dienen oder es können verschiedene andere Zusatzfunktionen bereitgestellt werden, die ein Zusammenwirken des Zusatzmoduls bzw. der Funktionseinrichtung mit dem Arbeitsgerät bzw. einer Steuereinheit des Arbeitsgeräts erfordern.

Es ist von Vorteil, wenn die wenigstens eine Zusatzfunktion eine Ortungsfunktion zur Ortung des Arbeitsgerätes umfasst. Insbesondere kann dabei die Funktionseinrichtung zur Bereitstellung der Ortungsfunktion eine Sendeeinheit und/oder eine Empfangseinheit oder eine Sende- und Empfangseinheit aufweisen. Für eine solche Ortungsfunktion ist das vorgeschlagene Zusatzmodul besonders vorteilhaft, da für eine Ortungsfunktion bzw. eine Sende- bzw. Empfangseinheit in der Regel eine Energieversorgung nötig ist, die - wie bereits erläutert - besonders einfach und effektiv durch Verwendung der Energieversorgungseinheit des Arbeitsgeräts bereitgestellt werden kann. Eine solche Ortungsfunktion können dabei bspw. weiterhin mehrere Basisstationen in einer Werkshalle oder dergleichen verteilt sein, die das Zusatzmodul über die Sendeeinheit lokalisieren können. Hierzu können bspw. elektromagnetische Wellen geeigneter Frequenz verwendet werden. Besondere Vorteile des Zusatzmoduls sind dabei, dass die Ortungsfunktion bspw. nachträglich für ein Arbeitsgerät bereitgestellt werden kann und dass das eine Zusatzmodul und damit die Ortungsfunktion zudem auch bei verschiedenen Arbeitsgeräten verwendet werden kann.

Vorzugsweise umfasst die wenigstens eine Zusatzfunktion eine mittels des Arbeitsgerätes ausführbare Anwendung. Bei einer solchen Anwendung kann es sich bspw. um zusätzliche, in einer Standard-Ausführung des Arbeitsgerätes nicht vorgesehene, Anwendung handeln. Bspw. kann eine Qualitätsüberwachung, ggf. mit Speicherung von Prozessdaten während der Durchführung eines Arbeitsprozesses, mit dem Arbeitsgerät vorgesehen sein.

Vorteilhafterweise ist das Arbeitsgerät, für das das Zusatzmodul vorgesehen ist, als Nietgerät, als Stanzgerät, als Clinchgerät, als Schraubgerät, als Bohrgerät oder als Schweißzange, insbesondere jeweils als mobiles Arbeitsgerät, ausgebildet. Bei diesen Arten von Arbeitsgeräten handelt es sich um häufig in der industriellen Montage verwendete Arbeitsgeräte, sodass hier eine besonders hohe Prozesssicherheit wünschenswert ist, die durch ein solches Zusatzmodul erreicht werden kann. Insbesondere ist das Arbeitsgerät als batteriebetriebenes Gerät ausgebildet.

Es ist von Vorteil, wenn die Energieversorgungseinheit als Energiespeichereinheit oder als Komponente zur Anbindung an ein elektrisches Energieversorgungsnetz ausgebildet ist. Bei der Energiespeichereinheit kann es sich bspw. allgemein um eine Batterie (Primär- oder Sekundärzellen) oder speziell um einen Akku handeln. Gerade bei solchen, nicht an einen festen Ort gebundenen Arbeitsgeräten ist bspw. eine Ortungsfunktion sehr vorteilhaft. Andererseits kann jedoch auch bei kabelgebundenen Geräten, d.h. bei einer Anbindung an ein Energieversorgungsnetz, ein gewisser Arbeitsradius vorgesehen sein, sodass bspw. eine Ortungsfunktion zweckmäßig ist. Andere Arten von Zusatzfunktionen können bspw. bei beiden Arten von Arbeitsgeräten vorteilhafthaft sein.

Ein erfindungsgemäßes Arbeitsgerät, das insbesondere als mobiles Arbeitsgerät ausgebildet ist, weist eine mit einem Gehäuse des Arbeitsgerätes mittels wenigstens einer Schnittstelle mechanisch und elektrisch verbindbare Energieversorgungseinheit auf, sowie ein erfindungsgemäßes Zusatzmodul.

Bzgl. der Vorteile sowie vorteilhafter Weiterbildungen des erfindungsgemäßen Arbeitsgeräts sei zur Vermeidung von Wiederholungen auf obige Ausführungen zum Zusatzmodul verwiesen.

Eine erfindungsgemäße Verwendung eines erfindungsgemäßen Zusatzmoduls oder Arbeitsgeräts ist in der Automobilindustrie oder in der Luft- und Raumfahrtindustrie. Gerade in diesen Bereichen der Industrie wird, nicht zuletzt aufgrund sehr hoher Sicherheitsanforderungen, eine hohe Prozesssicherheit erwartet. Diese kann durch die Verwendung des Zusatzmoduls bzw. Arbeitsgeräts erreicht werden, wie den ausführlich erläuterten Vorteilen zu entnehmen ist. Zudem ist die vorgeschlagene Lösung besonders kostensparend, ohne die Prozesssicherheit zu gefährden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung
- Figur 1: zeigt ein Arbeitsgerät, mit dem ein erfindungsgemäßes Zusatzmodul verwendbar ist.
- Figur 2: zeigt das Arbeitsgerät aus Figur 1 mit einem erfindungsgemäßen Zusatzmodul in einer bevorzugten Ausführungsform.
- Figur 3: zeigt ein erfindungsgemäßes Arbeitsgerät in einer bevorzugten Ausführungsform.
- Figur 4: zeigt ein erfindungsgemäßes Arbeitsgerät in einer weiteren bevorzugten Ausführungsform.

### Detaillierte Beschreibung der Zeichnung

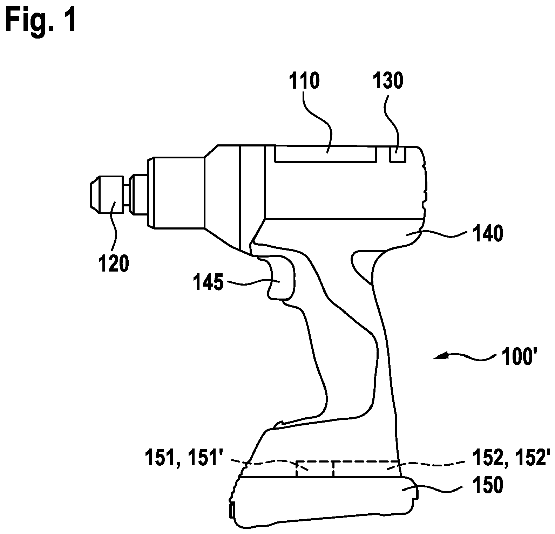

In Figur 1 ist ein Arbeitsgerät 100', hier beispielhaft in Form eines mobilen Schraubgeräts, insbesondere eines Mittelgriffschraubers, dargestellt. Es versteht sich, dass ein mobiles Schraubgerät auch andere Formen aufweisen kann, insbesondere bspw. die Form eines Winkelschraubers, für welche die folgenden Ausführungen entsprechend gelten.

Der Mittelgriffschrauber 100' weist ein Gehäuse 140, einen Montagekopf 120 sowie eine Betätigungstaste 145 zum Betätigen der Schraubfunktion des Mittelgriffschraubers 100', d.h. zum Durchführen eines Arbeitsprozesses, für den der Mittelgriffschrauber 100' vorgesehen ist, auf. In dem Montagekopf 120 kann - je nach Ausbildung des Montagekopfes - bspw. ein Bit oder direkt eine Schraube eingesetzt werden.

Weiterhin ist eine Steuereinheit 110 vorgesehen, auf der bspw. ein Anwendungsprogramm hinterlegt ist und das die nötige Elektronik zum Betrieb des Mittelgriffschraubers 100' aufweist. Bei dem Mittelgriffschrauber 100' kann es sich insbesondere um einen sog. messenden Schrauber handeln, d.h. es können bspw. Drehmomente bzw. Anzugsdrehmomente vorgegeben und überwacht, überprüft und/oder mitgeloggt werden.

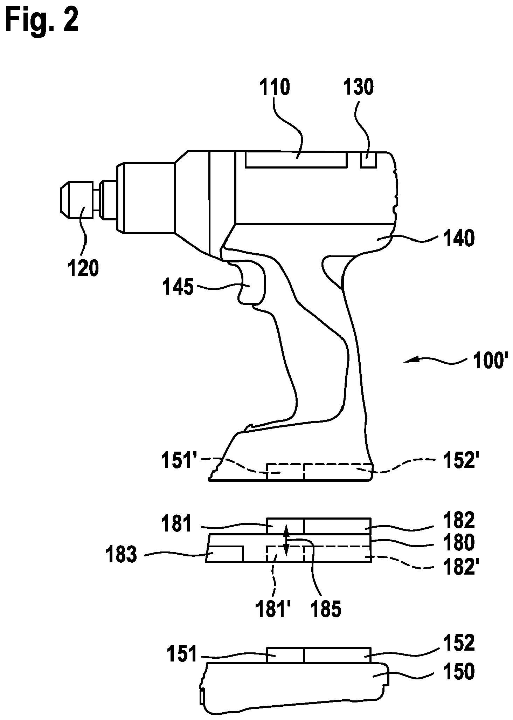

Weiterhin ist eine Energieversorgungseinheit bzw. Energiespeichereinheit 150 in Form eines Akkus vorgesehen, die mit dem Gehäuse 140 des Mittelgriffschraubers 100' sowohl mechanisch als auch elektrisch verbindbar ist. Hierzu sind eine elektrische Schnittstelle 151, 151' und eine mechanische Schnittstelle 152, 152' vorgesehen. Dabei weist der Akku 150 die energieversorgungseinheitsseitigen Anteile 151 und 152 auf, das Gehäuse 140 weist die gehäuseseitigen Anteile 151' und 152' auf. Aufgrund der zusammengesetzten Darstellung liegen die energieversorgungseinheitsseitigen und gehäuseseitigen Anteile der Schnittstellen jeweils übereinander. Für eine genauere Darstellung und Beschreibung sei insofern auf die Figur 2 verwiesen.

Es sei angemerkt, dass der Mittelgriffschrauber 100' anstatt des Akkus 150 als Energiespeichereinheit auch eine andere Energieversorgungseinheit aufweisen kann. Bspw. kann eine ein Stecker als Komponente zur Anbindung an ein Energieversorgungsnetz vorgesehen sein, der mit dem Mittelgriffschrauber 100' mechanisch und elektrisch verbindbar ist

Denkbar ist dabei auch, dass ein Kabel nicht (nur) zur Energieversorgung, sondern (auch) zur Datenübertragung und/oder zur Aufhängung (z.B. an einem Seilzug) dient. In einem solchen Fall kann dies auch zusätzlich zu einer Energiespeichereinheit wie einem Akku oder einer Komponente zur Anbindung an ein Energieversorgungsnetz, bspw. mit einem Stromkabel, vorgesehen sein.

In den genannten Fällen kann es sich dann auch bspw. um einen stationären Schrauber handeln, der zwar zur Verwendung aufgenommen werden kann, jedoch aufgrund des Kabels bzw. der Kabel an einer Arbeitsstelle verbleibt und ggf. auch aufgehängt ist.

In Figur 2 ist der Mittelgriffschrauber 100' aus Figur 1 erneut dargestellt, jedoch mit vom Gehäuse 140 getrennten Akku 150. Hierbei sind nunmehr auch die energieversorgungseinheitsseitigen Anteile 151 und 152 sowie die gehäuseseitigen Anteile 151' und 152' der elektrischen bzw. mechanischen Schnittstelle getrennt zu sehen.

Bei der elektrischen Schnittstelle 151, 151' kann es sich bspw. um mehrere Kontaktpaare handeln, die in zusammengesetzter Form eine elektrische Verbindung zwischen dem Akku 150 und dem Gehäuse 140 (mit entsprechender Elektrik bzw. Elektronik) bereitstellen.

Bei der mechanischen Schnittstelle 152, 152 kann es sich bspw. um eine Art Nut-Feder-Verbindung handeln, die eine formschlüssige Verbindung bereitstellt. Hierzu kann bspw. der Akku 150 seitlich am unteren Ende des Gehäuses 140 eingeschoben werden.

Weiterhin ist ein erfindungsgemäßes Zusatzmodul 180 in einer bevorzugten Ausführungsform dargestellt, das zwischen dem Gehäuse 140 und dem Akku 150 des Mittelgriffschraubers 100' angeordnet ist.

Das Zusatzmodul 180 weist nun Anteile von elektrischen und mechanischen Schnittstellen auf, die derart ausgebildet sind, dass sie mit dem jeweiligen energieversorgungseinheitsseitigen Anteilen des Akkus bzw. gehäuseseitigen Anteilen des Mittelschgriffschraubers 100' verbindbar sind. Ein Anteil 181 entspricht dabei dem energieversorgungseinheitseitigen Anteil 151, ein Anteil 182 entspricht dem energieversorgungseinheitseitigen Anteil 152, ein Anteil 181' entspricht dem gehäuseseitigen Anteil 151' und ein Anteil 182' entspricht dem gehäuseseitigen Anteil 152'.

Auf diese Weise kann das Zusatzmodul 180 mit dem Gehäuse 140 genau so verbunden werden wie der Akku 150 mit dem Gehäuse 140. Der Akku 150 wiederum kann genau so mit dem Zusatzmodul 180 verbunden werden, wie der Akku 150 mit dem Gehäuse 140.

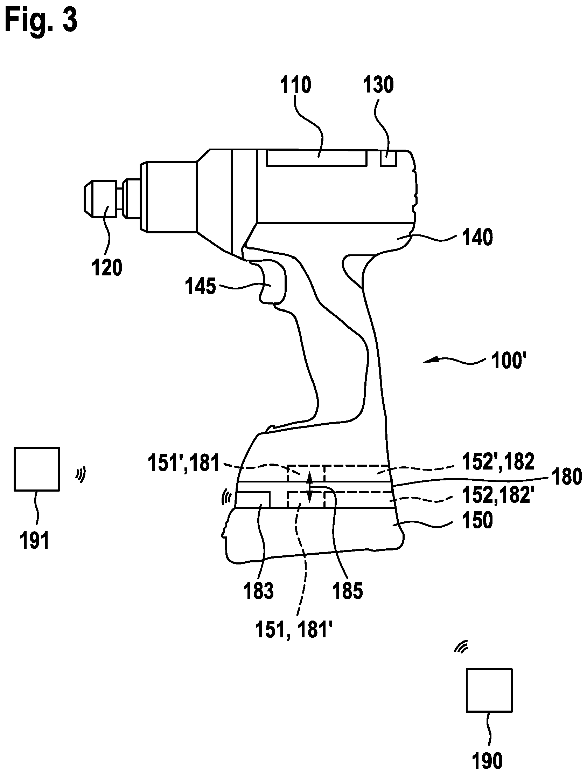

Auf diese Weise entsteht ein erfindungsgemäßes Arbeitsgerät 100 in einer bevorzugten Ausführungsform, hier in Form eines Mittelgriffschraubers, wie es in Figur 3 dargestellt ist. Hinsichtlich der Beschreibung der einzelnen Komponenten sei an dieser Stelle auf Figur 1 und die zugehörige Beschreibung verwiesen.

Durch die elektrische Verbindung 185 zwischen dem Anteil 181 und dem Anteil 181' in dem Zusatzmodul 180 wird zudem erreicht, dass die Energieversorgung des Mittelgriffschraubers durch den Akku 150 sichergestellt ist. Weiterhin weist das Zusatzmodul 180 als Teil einer Funktionseinrichtung eine Sendeeinheit 183 auf, die über den Akku 150 mit Energie versorgt werden kann und eine Ortungsfunktion bereitstellt. Hierzu können von der Sendeeinheit 183 ausgesendete Signale bspw. mittels Basisstationen, von denen hier beispielhaft zwei Basisstationen 190, 191 dargestellt sind, empfangen werden.

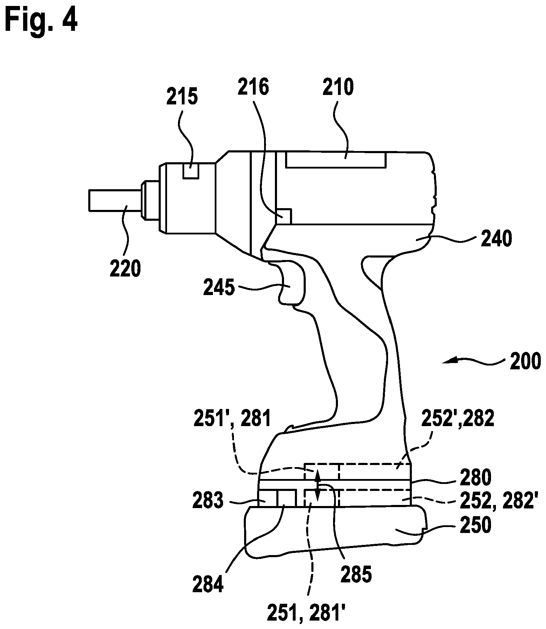

In Figur 4 ist ein erfindungsgemäßes Arbeitsgerät 200 in einer weiteren bevorzugten Ausführungsform, hier beispielhaft in Form eines mobilen Blindnietgeräts, insbesondere eines Mittelgriffnietgeräts, dargestellt.

Das Nietgerät 200 weist ein Gehäuse 240, einen Montagekopf bzw. ein Mundstück 220 sowie eine Betätigungstaste 145 zum Betätigen der Nietfunktion des Nietgeräts 200, d.h. zur Durchführung eines Arbeitsprozesses, für den das Nietgerät vorgesehen ist, auf.

Weiterhin ist eine Steuereinheit 210 vorgesehen, auf der bspw. ein Anwendungsprogramm hinterlegt ist und das die nötige Elektronik, ggf. auch ein Display, zum Betrieb des Nietgeräts 200 aufweist. Bei dem Nietgerät 200 kann es sich insbesondere um ein sog. messendes Nietgerät handeln, d.h. es können bspw. Kräfte, die auf die Zugstange und damit auf einen Dorn des Niets bzw. den Niet wirken, vorgegeben und mittels eines Kraftsensors 215 überwacht, überprüft und/oder mitgeloggt werden. Mittels eines Wegsensors 216 kann bspw. auch ein von dem Dorn während des Nietvorgangs zurückgelegter Weg erfasst werden.

Weiterhin ist eine Energieversorgungseinheit bzw. Energiespeichereinheit 250 in Form eines Akkus vorgesehen, die mit dem Gehäuse 240 des Nietgeräts 200 sowohl mechanisch als auch elektrisch verbindbar ist. Hierzu sind eine elektrische Schnittstelle 251, 251' und eine mechanische Schnittstelle 252, 252' vorgesehen. Dabei weist der Akku 250 die energieversorgungseinheitsseitigen Anteile 251 und 252 auf, das Gehäuse 240 weist die gehäuseseitigen Anteile 251' und 252' auf. Aufgrund der zusammengesetzten Darstellung liegen die energieversorgungseinheitsseitigen und gehäuseseitigen Anteile jeweils übereinander. Für eine genauere Darstellung und Beschreibung sei insofern auf die Figur 2 verwiesen, da die Schnittstellen hier auf die gleiche Weise ausgebildet sein können.

Es sei angemerkt, dass das Nietgerät 200 anstatt des Akkus 250 als Energiespeichereinheit auch eine andere Energieversorgungseinheit aufweisen kann. Bspw. kann eine ein Stecker als Komponente zur Anbindung an ein Energieversorgungsnetz vorgesehen sein, der mit dem Nietgerät 200 mechanisch und elektrische verbindbar ist

Denkbar ist dabei auch, dass ein Kabel nicht (nur) zur Energieversorgung, sondern (auch) zur Datenübertragung und/oder zur Aufhängung (z.B. an einem Seilzug) dient. In einem solchen Fall kann dies auch zusätzlich zu einer Energiespeichereinheit wie einem Akku oder einer Komponente zur Anbindung an ein Energieversorgungsnetz, bspw. mit einem Stromkabel, vorgesehen sein.

In den genannten Fällen kann es sich dann auch bspw. um ein stationäres Nietgerät handeln, das zwar zur Verwendung aufgenommen werden kann, jedoch aufgrund des Kabels bzw. der Kabel an einer Arbeitsstelle verbleibt und ggf. auch aufgehängt ist.

Durch die elektrische Verbindung 285 zwischen dem Anteil 281 und dem Anteil 281' in dem Zusatzmodul 280 wird zudem erreicht, dass die Energieversorgung des Nietgeräts durch den Akku 250 sichergestellt ist. Weiterhin weist das Zusatzmodul 280 als Teil einer Funktionseinrichtung eine Sendeeinheit 283 auf, die über den Akku 250 mit Energie versorgt werden kann und eine Ortungsfunktion bereitstellt.

Weiterhin ist beispielhaft eine Speichereinheit 184 als weiterer Teil der Funktionseinrichtung vorgesehen, auf der bspw. eine Anwendung, die mit dem Nietgerät ausgeführt werden kann, hinterlegt sein kann. In diesem Fall kann bspw. eine Datenschnittstelle durch die mittels der Anteile 251' und 281 bereitgestellten elektrischen Verbindung bereitgestellt werden, sodass die Steuereinheit 210 auf die Speichereinheit 284 zugreifen kann.

## Patentansprüche

1. Zusatzmodul (180, 280) zur Verwendung mit einem Arbeitsgerät (100, 100', 200), mit einer Funktionseinrichtung (183, 283, 284), die wenigstens eine Zusatzfunktion für das Arbeitsgerät (100, 100', 200) bereitstellt, wobei das Arbeitsgerät (100, 100', 200) eine mit einem Gehäuse (140, 240) des Arbeitsgerätes mittels wenigstens einer Schnittstelle (151, 151', 251, 251', 152, 152', 252, 252') mechanisch und elektrisch verbindbare Energieversorgungseinheit (150, 250) aufweist, wobei das Zusatzmodul (180, 280) mechanisch und elektrisch unter Verwendung eines energieversorgungseinheitsseitigen Anteils (181, 281, 182', 282) der wenigstens einen Schnittstelle mit dem Gehäuse (140, 240) des Arbeitsgerätes (100, 100', 200) verbindbar ist, wobei das Zusatzmodul (180, 280) mechanisch und elektrisch unter Verwendung eines gehäuseseitigen Anteils (181', 281', 182', 282') der wenigstens einen Schnittstelle mit der Energieversorgungeinheit (150, 250) verbindbar ist, und wobei das Zusatzmodul (180, 280) dazu ausgebildet ist, eine elektrische Verbindung (185, 285) zwischen dem gehäuseseitigen und dem energieversorgungseinheitsseitigen Anteil der wenigstens einen Schnittstelle, die einer elektrischen Verbindung dienen, bereitzustellen.

2. Zusatzmodul (180, 280) nach Anspruch 1, wobei die Funktionseinrichtung (183, 283, 284) elektrisch betreibbar und wobei das Zusatzmodul (180, 280) dazu ausgebildet ist, die Funktionseinrichtung (183, 283, 284) mittels der Energieversorgungseinheit (150, 250) des Arbeitsgerätes mit elektrischer Energie zu versorgen, wenn das Zusatzmodul (180, 280) mit der Energieversorgungseinheit (150, 250) verbunden ist.

3. Zusatzmodul (180, 280) nach Anspruch 1 oder 2, wobei eine Datenschnittstelle vorgesehen ist, mittels welcher Daten zwischen der Funktionseinrichtung (183, 283, 284) und dem Arbeitsgerät (100, 100', 200) austauschbar sind.

4. Zusatzmodul (180, 280) nach einem der vorstehenden Ansprüche, wobei die wenigstens eine Zusatzfunktion eine Ortungsfunktion zur Ortung des Arbeitsgerätes (100, 100', 200) umfasst.

5. Zusatzmodul (180, 280) nach Anspruch 4, wobei die Funktionseinrichtung zur Bereitstellung der Ortungsfunktion eine Sendeeinheit (183, 283) und/oder eine Empfangseinheit oder eine Sende- und Empfangseinheit aufweist.

6. Zusatzmodul (180, 280) nach einem der vorstehenden Ansprüche, wobei die wenigstens eine Zusatzfunktion eine mittels des Arbeitsgerätes (100, 100', 200) ausführbare Anwendung umfasst.

7. Zusatzmodul (180, 280) nach einem der vorstehenden Ansprüche, wobei das Arbeitsgerät als Nietgerät (200), als Stanzgerät, als Clinchgerät, als Schraubgerät (100, 100'), als Bohrgerät oder als Schweißzange, insbesondere jeweils als mobiles Arbeitsgerät, ausgebildet ist.

8. Zusatzmodul (180, 280) nach einem der vorstehenden Ansprüche, wobei die Energieversorgungseinheit als Energieversorgungeinheit (150, 250) oder als Komponente zur Anbindung an ein elektrisches Energieversorgungsnetz ausgebildet ist.

9. Arbeitsgerät (100, 200), insbesondere mobiles Arbeitsgerät, das eine mit einem Gehäuse (140, 240) des Arbeitsgerätes mittels wenigstens einer Schnittstelle (151, 151', 251, 251', 152, 152', 252, 252') mechanisch und elektrisch verbindbare Energieversorgungseinheit (150, 250) aufweist, mit einem Zusatzmodul (180, 280) nach einem der vorstehenden Ansprüche.

10. Verwendung eines Zusatzmoduls (180, 280) nach einem der Ansprüche 1 bis 8 oder eines Arbeitsgeräts (100, 200) nach Anspruch 9 in der Automobilindustrie oder in der Luft- und Raumfahrtindustrie.
